# EUROPEAN PATENT APPLICATION

(11) **EP 4 607 168 A1**
(43) Date of publication of application: **27.08.2025**
(21) Application number: 22962689.0
(22) Date of filing: 18.10.2022
(51) Int. Cl.: G01L 17/00

(54) **PHYSICAL QUANTITY DETECTION DEVICE**

(71) Applicant: Hitachi Astemo, Ltd., Ibaraki 312-8503 (JP)
(72) Inventor: YUKI, Fumio, Hitachinaka-shi, Ibaraki 312-8503 (JP); HOSOKAWA, Takeo, Hitachinaka-shi, Ibaraki 312-8503 (JP); ANRAKU, Kyoya, Hitachinaka-shi, Ibaraki 312-8503 (JP); SOMA, Atsuo, Hitachinaka-shi, Ibaraki 312-8503 (JP)
(74) Representative: MERH-IP Matias Erny Reichl Hoffmann Patentanwälte PartG mbB
(86) International application number: PCT/JP2022/038742
(87) International publication number: WO 2024/084577

(57) **Abstract**

Provided is a physical quantity detection device capable of not only measuring tire air pressure without using a sensor component other than a strain sensor, but also detecting a load and wear from a strain signal corrected using information on the tire air pressure. The physical quantity detection device according to the present invention detects air pressure of a tire at a reference level of a signal waveform of the strain sensor, and detects a load and wear of the tire from a strain signal corrected by the air pressure of the tire. The physical quantity detection device according to the present invention holds a reference value stored in a storage unit as a table, and detects each physical quantity by comparison with the reference value.

## Description

### Technical Field

The present invention relates to a physical quantity detection device that detects a physical quantity acting on a tire.

### Background Art

In recent years, a tire sensor technology has been actively developed to provide a safer traveling state to realize automatic driving, the tire sensor technology being used to detect slipperiness of a road surface, a load applied to a tire, and the like based on information obtained from the tire. The tire sensor technology is developed to prevent not only a tire trouble such as a burst due to an overload or the like but also a vehicle rollover due to a load imbalance by providing a safer traveling state. Constructing this kind of safety control system requires accurate detection of physical quantities such as a load and air pressure acting on a tire.

A strain sensor of a tire can detect a load acting on the tire and wear of the tire by detecting strain deformation of the tire. Consequently, improvement in traveling safety is expected by preventing vehicle troubles and detecting conditions of traveling and a road surface.

The strain sensor detects changes in various physical quantities (e.g., vehicle speed, temperature, air pressure, load, etc.) as strain. Thus, a detection signal (strain signal) representing a result of the strain detected by the strain sensor may include components caused by these physical quantities. When a specific physical quantity is detected from a correspondence relationship between a specific physical quantity and a strain signal, detection of the specific physical quantity decreases in accuracy due to components caused by these other physical quantities.

PTL 1 below describes a technique related to a strain sensor. PTL 1 describes the technique to achieve an object of providing "a system and method capable of estimating a load applied to a tire of a vehicle", "the system and method including: an air pressure measurement sensor attached to the tire to measure an air pressure level of a tire cavity; and one or more deformation measurement sensors including piezo film attached to a tire sidewall. The deformation measuring sensor generates a deformation signal for a tire footprint, the deformation signal having a signal power level indicative of a deformation level of a sidewall near a footprint contact surface. To be able to specify a load level from the signal power level based on post-correction using tire pressure, a signal power-to-load map is generated and stored, in which a load level and the signal power level, which are each in a predetermined range and are corrected using tire pressure, are associated with each other in order to 'Provided are a method and a system capable of estimating a load applied to a tire of a vehicle" (see Abstract).

### Citation List

### Patent Literature

PTL 1: JP 2014-054978 A

### Summary of Invention

### Technical Problem

The technique described in PTL 1 causes the signal power level of a load sensor to be corrected using tire air pressure measured by the air pressure measurement sensor, in view of the load sensor in which a signal amplitude changes as the tire air pressure changes. Unfortunately, a detection signal of the load sensor may include a component caused by a physical quantity other than air pressure. Providing the air pressure measurement sensor separately increases the number of system components, and thus may lead to an increase in product cost and complexity of the system. Thus, the technique described in PTL 1 is considered to have room for improvement in detection accuracy of the load sensor and product cost.

In view of the above circumstances, an object of the present invention is to provide a physical quantity detection device capable of not only measuring tire air pressure without using a sensor component other than a strain sensor, but also detecting a load and wear from a strain signal corrected using information on the tire air pressure.

### Solution to Problem

The invention disclosed in the present application will be briefly described for a representative outline as follows. That is, a physical quantity detection device of the present invention detects a plurality of physical quantities acquired from a strain sensor installed in a tire. The physical quantity detection device detects air pressure of the tire with a magnitude at a reference level of a signal waveform output by the strain sensor in a state where the tire is not grounded on a road surface.

### Advantageous Effects of Invention

The physical quantity detection device according to the present invention enables not only detection of air pressure of the tire with a magnitude at a reference level of a signal waveform of the strain sensor, but also detection of the load and the wear at a positive peak and a negative peak of the signal waveform. That is, one sensor can detect three physical quantities, so that product cost can be reduced by reduction in number of sensors, and high detection accuracy can be achieved.

Features related to the present invention will become apparent from the description herein and accompanying drawings. Problems, configurations, and effects other than the above will be clarified by the following description of embodiments.

### Brief Description of Drawings

[FIG. 1] FIG. 1 is a configuration diagram illustrating a vehicle equipped with a physical quantity detection device according to a first embodiment.
[FIG. 2] FIG. 2 is a sectional view illustrating a main part of a tire of a vehicle equipped with the physical quantity detection device according to the first embodiment.
[FIG. 3] FIG. 3 is a block diagram illustrating the physical quantity detection device according to the first embodiment.
[FIG. 4] FIG. 4 is an explanatory diagram illustrating a sensor signal waveform of a strain sensor in accordance with a rotation state of the tire according to the first embodiment.
[FIG. 5] FIG. 5 is a waveform diagram illustrating a sensor signal waveform of the strain sensor in accordance with a rotation state of the tire according to the first embodiment.
[FIG. 6] FIG. 6 is an explanatory diagram illustrating a sensor signal waveform of the strain sensor in one cycle according to the first embodiment.
[FIG. 7] FIG. 7 is a flowchart for deriving a table of parameters mixed in a sensor signal waveform of the strain sensor according to the first embodiment.
[FIG. 8] FIG. 8 is an explanatory diagram illustrating a speed correlation table of a table, the speed correlation table showing a correlation between the amount of correction at a reference level of a sensor signal waveform of the strain sensor according to the first embodiment and speed.
[FIG. 9] FIG. 9 is an explanatory diagram illustrating a temperature correlation table of the table, the temperature correlation table showing a correlation between the amount of correction at a reference level of a sensor signal waveform of the strain sensor according to the first embodiment and temperature.
[FIG. 10] FIG. 10 is an explanatory diagram illustrating an air pressure correlation table of the table, the air pressure correlation table showing a correlation between the amount of correction at a reference level of a sensor signal waveform of the strain sensor according to the first embodiment and air pressure.
[FIG. 11] FIG. 11 is an explanatory diagram illustrating a table including various tables according to the first embodiment.
[FIG. 12] FIG. 12 is a flowchart for estimating air pressure from a sensor signal waveform of the strain sensor according to the first embodiment.
[FIG. 13] FIG. 13 shows a result of verifying whether air pressure of the strain sensor according to the first embodiment can be estimated.
[FIG. 14] FIG. 14 is an explanatory diagram illustrating a first table of parameters mixed in a sensor signal waveform of the strain sensor according to the first embodiment.
[FIG. 15] FIG. 15 is a block diagram illustrating a physical quantity detection device according to a second embodiment.
[FIG. 16] FIG. 16 is a flowchart for deriving a table of parameters mixed in a sensor signal waveform of a strain sensor according to the second embodiment.
[FIG. 17] FIG. 17 is an explanatory diagram illustrating a table including various tables according to the second embodiment.
[FIG. 18] FIG. 18 is a flowchart for estimating a load from a sensor signal waveform of the strain sensor according to the second embodiment.
[FIG. 19] FIG. 19 shows a result of verifying whether a load of the strain sensor according to the second embodiment can be estimated.
[FIG. 20] FIG. 20 shows a result of verifying whether air pressure of the strain sensor according to a third embodiment can be estimated.

### Description of Embodiments

Hereinafter, embodiments of the present invention will be described in detail with reference to the drawings. All the drawings for describing the embodiments denote the same members with the same reference numerals in principle, and duplicated description thereof will not be described. The present invention is not to be construed as being limited to the description of the embodiments described below. Those skilled in the art can easily understand that the specific configuration can be changed without departing from the spirit or gist of the present invention.

Notations such as "first", "second", and "third" in the present specification and the like are attached to identify components, and do not necessarily limit the number or order. Numbers for identifying components are used for each context, and a number used in one context does not necessarily indicate the same configuration in another context. Additionally, a component identified by a certain number is not prevented from also functioning as a component identified by another number.

Drawings and the like indicate positions, sizes, shapes, ranges, and the like of respective components that may not represent actual positions, sizes, shapes, ranges, and the like to facilitate understanding of the invention. Thus, the present invention is not necessarily limited to the positions, sizes, shapes, ranges, and the like disclosed in the drawings and the like.

A component expressed in the singular in the present specification is intended to constitute a plurality of the component unless context clearly indicates otherwise.

### [First Embodiment]

### <General configuration of vehicle>

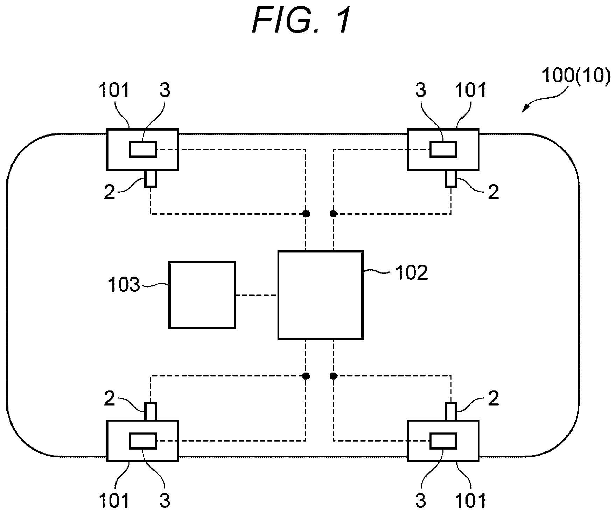

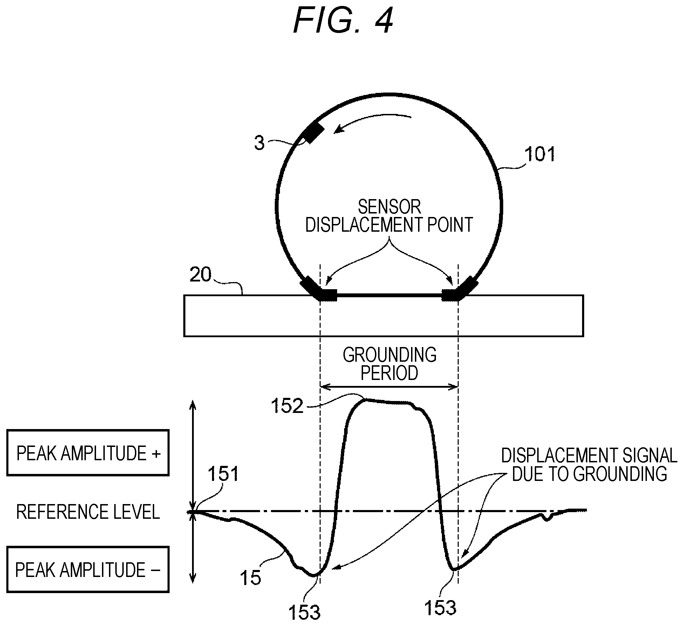

FIG. 1 is a configuration diagram illustrating a vehicle 100 equipped with a physical quantity detection device 10 according to a first embodiment. As illustrated in FIG. 1, the vehicle 100 includes four tires 101, one ECU 102, and one report unit 103. The vehicle 100 includes four temperature sensors 2 and four strain sensors 3. The vehicle 100 may be not only a four-wheeled vehicle but also a two-wheeled vehicle, a three-wheeled vehicle, or a vehicle having five or more wheels, which travels on a road surface 20 (FIG. 4).

The vehicle 100 travels on the road surface 20 by rotation of the four tires 101. The vehicle 100 allows a person to ride.

The tires 101 are grounded on the road surface 20 to receive a load of the vehicle 100. The tires 101 are rotated. The tires 101 are each a rubber member.

The ECU 102 is a controller that controls the vehicle 100. The ECU 102 includes an arithmetic processor, a storage unit, and an input-output port electrically connected to various sensors, an arithmetic processor such as a CPU, a storage unit such as a memory, and the report unit 103.

The report unit 103 is a monitor of a car navigation system. The report unit 103 includes a display screen that is switched between a screen of car navigation and a report screen of air pressure or the like by interruption processing performed by the ECU 102. The report unit 103 controls display of the display screen based on control of the ECU 102.

The temperature sensor 2 acquires temperature of each tire 101 and outputs the temperature to the ECU 102.

Each strain sensor 3 being a sensor element acquires a sensor signal waveform 15 (FIG. 4 and the like) in each tire 101 and outputs the sensor signal waveform to the ECU 102. The strain sensor 3 can also detect the temperature of each tire 101 instead of the temperature sensor 2.

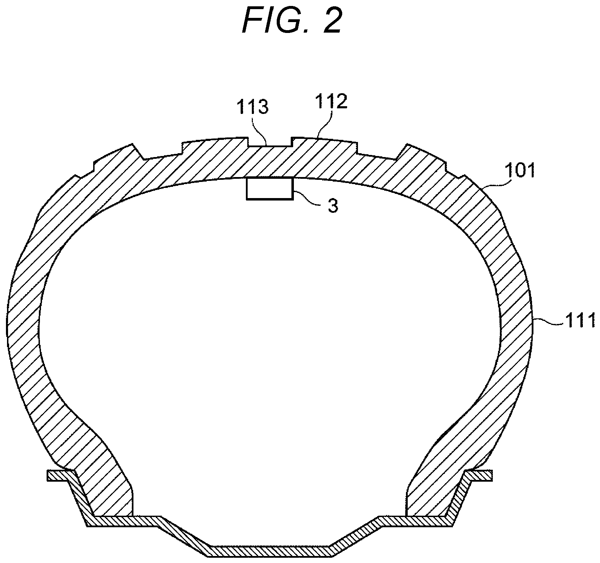

FIG. 2 is a sectional view illustrating a main part of each tire 101 of the vehicle 100 equipped with the physical quantity detection device 10 according to the first embodiment. As illustrated in FIG. 2, each tire 101 mainly includes a sidewall part 111 and a tread part 112. The tread part 112 is provided in its surface (tread surface) with a groove (also referred to as a tire groove) 113. The strain sensor 3 is installed on a tire inner surface below a tread surface in the tire 101, particularly, a tire inner surface immediately below a groove 113 of the tread surface. This installation improves detection sensitivity of the sensor. The strain sensor 3 detects displacement of the tire 101 in a rotation direction or a sectional direction (rotation axis direction), i.e., a decrease in curvature of a tread inner surface as the air pressure increases (conversely, an increase in curvature of the tread inner surface as the air pressure decreases) and elongation of the tread surface in a horizontal direction (rotation direction). In other words, the strain sensor 3 acquires the sensor signal waveform 15 from a magnitude of a radius of curvature of a tire tread inner surface (FIG. 2) and a magnitude of the elongation of the tire tread in the horizontal direction (rotation direction).

### <Physical quantity detection device 10>

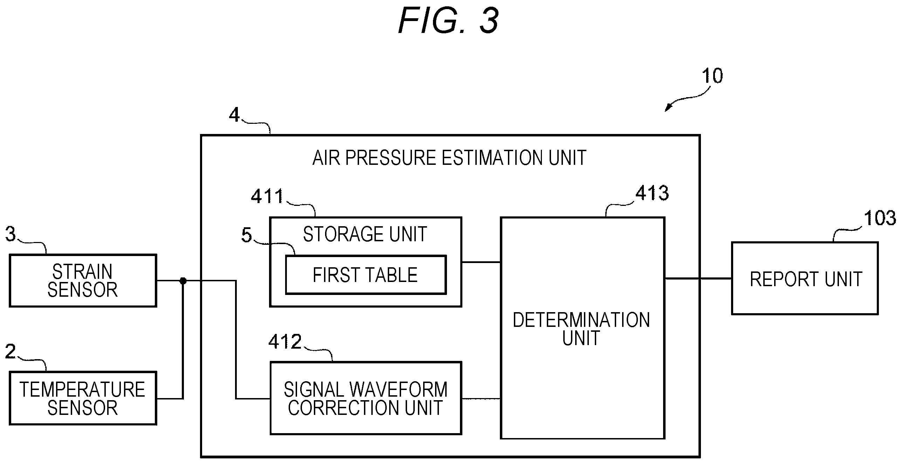

FIG. 3 is a block diagram illustrating the physical quantity detection device 10 according to the first embodiment. The physical quantity detection device 10 relates to a safe driving support device for the vehicle 100, and particularly provides a safe traveling state to prevent an accident due to insufficient control of a brake, or the like. The physical quantity detection device 10 detects air pressure or the like affecting durability or grip force of the tire 101 mounted on the vehicle 100.

As illustrated in FIG. 3, the physical quantity detection device 10 includes the strain sensor 3, an air pressure estimation unit 4, and the report unit 103. The physical quantity detection device 10 detects the air pressure of the tire 101 based on a signal waveform having been output.

### <Strain sensor 3>

The strain sensor 3 is a sensor element. The strain sensor 3 is a semiconductor in which a change in resistance is converted to the amount of strain that is to be output. One strain sensor 3 is disposed on each tire 101. The strain sensor 3 outputs the sensor signal waveform 15 having a reference level 151, a positive level changing to be more positive than the reference level 151, and a negative level changing to be more negative than the reference level 151 (FIG. 4, etc.).

### <Air pressure estimation unit 4>

The air pressure estimation unit 4 functions when a program in the ECU 102 is executed to exhibit functions of the air pressure estimation unit 4. The air pressure estimation unit 4 receives the sensor signal waveform 15 output from the strain sensor 3.

The air pressure estimation unit 4 acquires the temperature of the tire 101 from the temperature sensor 2. The air pressure estimation unit 4 acquires speed by dividing a tire outer circumference by an output cycle of the sensor signal waveform 15. The air pressure estimation unit 4 may acquire the speed from a speed sensor or the like. The air pressure estimation unit 4 corrects the sensor signal waveform 15 output from the strain sensor 3 in accordance with conditions of acquired parameters such as temperature and speed, and estimates air pressure or the like from a difference between a correction signal of the sensor signal waveform 15 and a reference waveform (reference value) held in a storage unit 411. The air pressure estimation unit 4 transmits the estimated air pressure and the like to the report unit 103.

The air pressure estimation unit 4 includes the storage unit 411, a signal waveform correction unit 412, and a determination unit 413.

The storage unit 411 stores the reference waveform (a peak value at the positive level, a peak value at the negative level, the reference level) acquired under a reference condition (air pressure, temperature, speed) of the sensor signal waveform 15 output from the strain sensor 3 and a first table 5 for the amount of change for each parameter condition. Examples of acquired data include data on an asphalt road surface.

The signal waveform correction unit 412 corrects air pressure, speed, and temperature, which are parameters of mixed signals mixed in the sensor signal waveform 15, to a signal waveform under a predetermined condition to cancel a difference from the reference condition using values in the first table 5 stored in the storage unit 411, and transmits a correction signal waveform of the sensor signal waveform 15 to the determination unit 413.

The determination unit 413 compares a peak value 152 at the positive level, a peak value 153 at the negative level, and the reference level 151, which are corrected and transmitted by the signal waveform correction unit 412, with correlation characteristics for each parameter condition stored in the first table 5 stored in the storage unit 411, and determines the amount of air pressure from a difference in characteristics from the reference level 151. The determination unit 413 transmits the amount of air pressure estimated to the report unit 103.

### <Sensor signal waveform 15>

FIG. 4 is an explanatory diagram illustrating the sensor signal waveform 15 of the strain sensor 3 in accordance with a rotation state of the tire 101 according to the first embodiment. As illustrated in FIG. 4, the strain sensor 3 disposed in the tire 101 outputs the sensor signal waveform 15 that changes depending on a state of the tire 101 rotating.

The strain sensor 3 outputs the sensor signal waveform 15 having the reference level 151, the positive level changing to be more positive than the reference level 151, and the negative level changing to be more negative than the reference level 151.

The strain sensor 3 maintains the reference level 151 of the sensor signal waveform 15 when the tire 101 is not in contact with the road surface 20. The strain sensor 3 outputs the peak value 152 at the positive level of the sensor signal waveform 15 in a state where the tire 101 (corresponding to an installation part of the strain sensor 3) is in contact with the road surface 20. The strain sensor 3 outputs the peak value 153 at the negative level of the sensor signal waveform 15 at the moment when the tire 101 (corresponding to the installation part of the strain sensor 3) is grounded on or separated from the road surface 20. Here, the moment at which the tire 101 is grounded on or separated from the road surface 20 is a sensor displacement point. A period between two sensor displacement points is a grounding period in which the tire 101 (corresponding to the installation part of the strain sensor 3) is grounded on the road surface 20.

The sensor signal waveform 15 detected in this manner changes in accordance with various physical quantities (the amount of load, air pressure, speed, temperature).

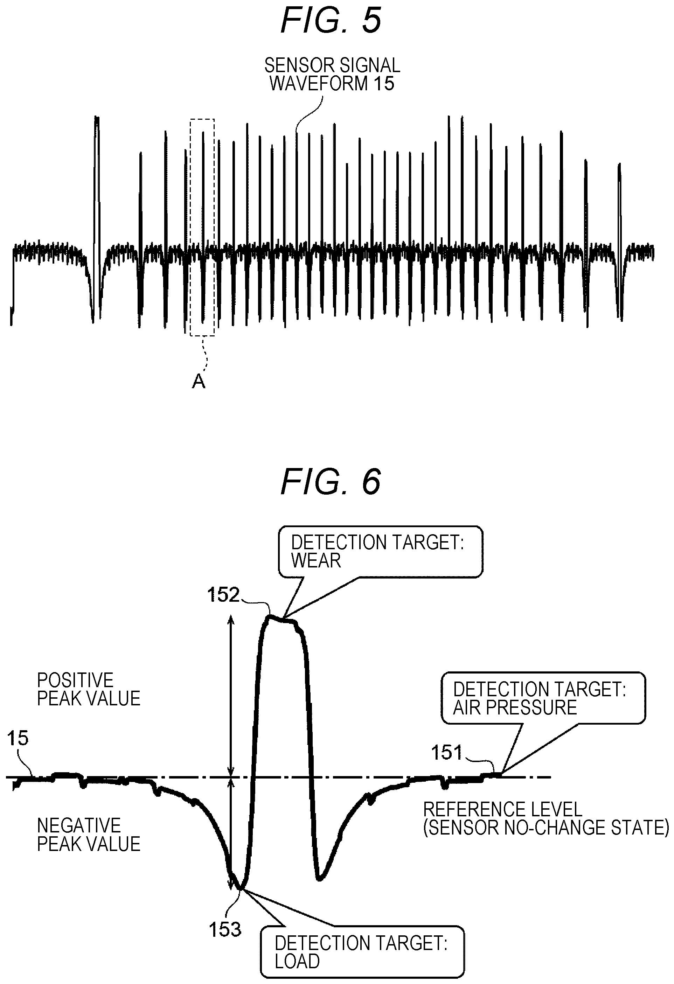

FIG. 5 is a waveform diagram illustrating the sensor signal waveform 15 of the strain sensor 3 in accordance with a rotation state of the tire 101 according to the first embodiment. As illustrated in FIG. 5, the tire 101 is rotating, so that the sensor signal waveform 15 of the strain sensor 3 sequentially repeats the reference level 151, the negative level that changes negatively from the reference level 151, the positive level that changes positively from the reference level 151, and the negative level that changes negatively from the reference level 151. The sensor signal waveform 15 has a signal value that can be represented by a signal amplitude. FIGS. 4 to 5 also represent the sensor signal waveform 15 with the signal amplitude. The signal amplitude herein may be any value as long as the value represents a fluctuation width of the sensor signal waveform 15. As illustrated in FIG. 6, the sensor signal waveform 15 has a waveform in which a falling waveform is continuous before and after a rising waveform. For example, an amplitude of the second falling waveform can be treated as the amplitude of the sensor signal waveform 15. The following description is based on this premise.

FIG. 6 is an explanatory diagram illustrating the sensor signal waveform 15 of the strain sensor 3 in one cycle according to the first embodiment. FIG. 6 is an enlarged view of a part A in FIG. 5. As illustrated in FIG. 6, both a peak value at the positive level (it may be referred to below as a positive peak value) 152 and a peak value at the negative level (it may be referred to below as a negative peak value) 153 include information on a road surface type.

### <Method for creating first table 5>

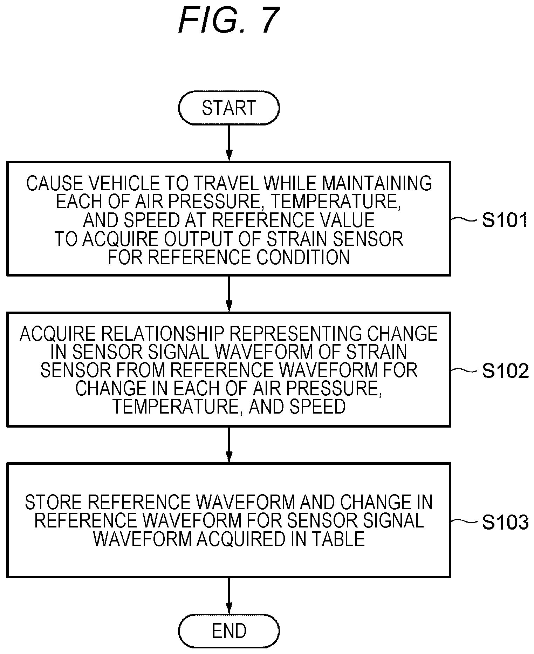

FIG. 7 is a flowchart for deriving the first table 5 that stores correlation between the reference level and each condition including the reference condition of the sensor signal waveform 15 of the strain sensor 3 according to the first embodiment.

As illustrated in FIG. 7, a predetermined controller (not illustrated) for a table creation examination in S101 causes the vehicle 100 to travel while maintaining each of air pressure, temperature, and speed at a reference value to acquire output of the strain sensor 3 for the reference condition. When air pressure is detected, attention is paid to a reference level in this waveform.

The controller in S102 acquires a relationship representing a change in the sensor signal waveform 15 of the strain sensor 3 from the reference waveform when the vehicle 100 is caused to travel while changing each of the air pressure, temperature, and speed from the reference value.

The controller in S103 stores the reference waveform and the amount of change from the reference waveform in the first table 5 for the sensor signal waveform 15 acquired in S102.

The change in the sensor signal waveform 15 when each condition changes is not necessarily represented using a difference from the reference and a difference from a reference signal value. However, an absolute value of the signal value is different for each vehicle type or tire type, so that data as in the first table 5 needs to be created in advance for each absolute value, and thus the amount of data greatly increases. Thus, the amount of data is reduced by describing the data using the difference from the reference value.

### <First table 5>

The storage unit 411 preliminarily stores a table showing a correlation between the reference level 151 of the sensor signal waveform 15 of the strain sensor 3 and air pressure, temperature, and speed while changing these values.

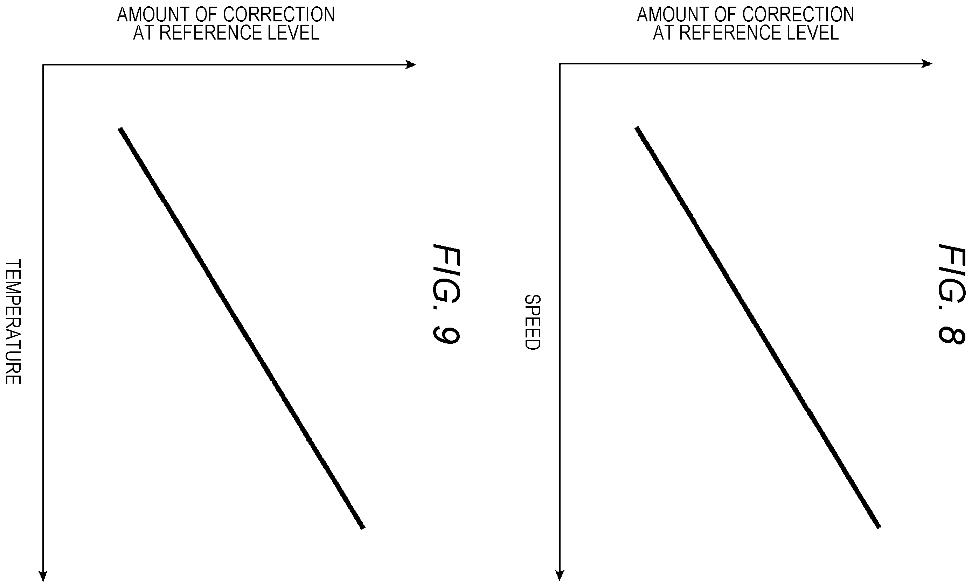

FIG. 8 is an explanatory diagram illustrating a speed correlation table of the first table 5, the speed correlation table showing a correlation between the amount of correction at the reference level 151 of the sensor signal waveform 15 of the strain sensor 3 according to the first embodiment and speed. The table illustrated in FIG. 8 acquires a correlation in which the amount of correction at the reference level 151 of the sensor signal waveform 15 increases as the speed increases.

FIG. 9 is an explanatory diagram illustrating a temperature correlation table of the first table 5, the temperature correlation table showing a correlation between the amount of correction at the reference level 151 of the sensor signal waveform 15 of the strain sensor 3 according to the first embodiment and temperature. The table illustrated in FIG. 9 acquires a correlation in which the amount of correction at the reference level 151 of the sensor signal waveform 15 increases as the temperature increases.

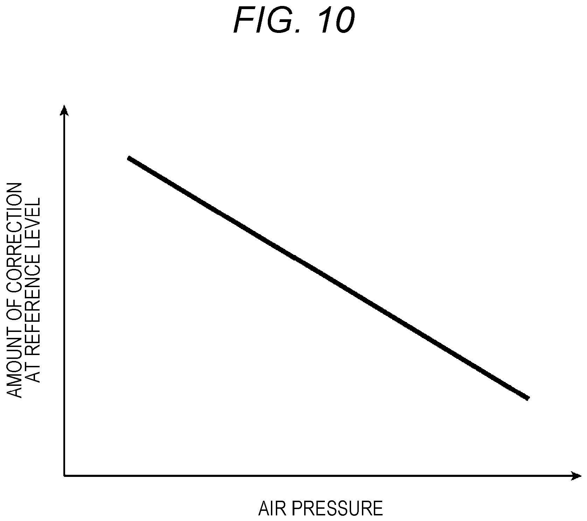

FIG. 10 is an explanatory diagram illustrating an air pressure correlation table of the first table 5, the air pressure correlation table showing a correlation between the amount of correction at the reference level 151 of the sensor signal waveform 15 of the strain sensor 3 according to the first embodiment and air pressure. The table illustrated in FIG. 10 acquires a correlation in which the amount of correction at the reference level 151 of the sensor signal waveform 15 decreases as the air pressure increases.

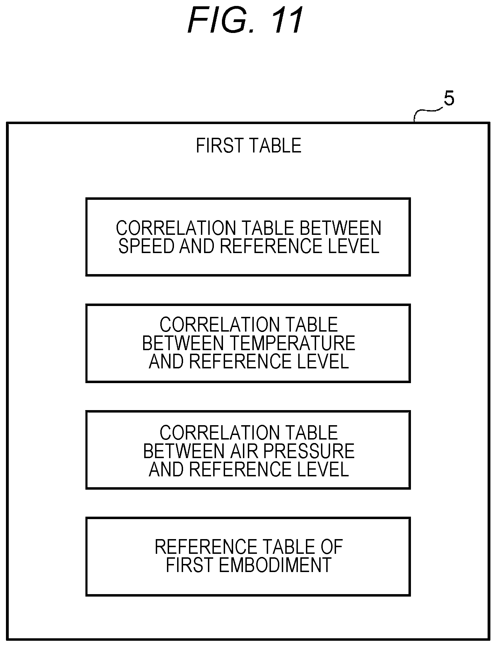

FIG. 11 is an explanatory diagram illustrating the first table 5 including various tables according to the first embodiment. As illustrated in FIG. 11, the first table 5 includes the reference table of the first embodiment and the tables of various correlations illustrated in FIGS. 8 to 10. Thus, the amount of correction is estimated from the first table 5 stored in the storage unit 411 for the reference level 151 of the sensor signal waveform 15 output from the strain sensor 3 for each parameter in the vehicle 100 traveling.

### <Method for detecting air pressure>

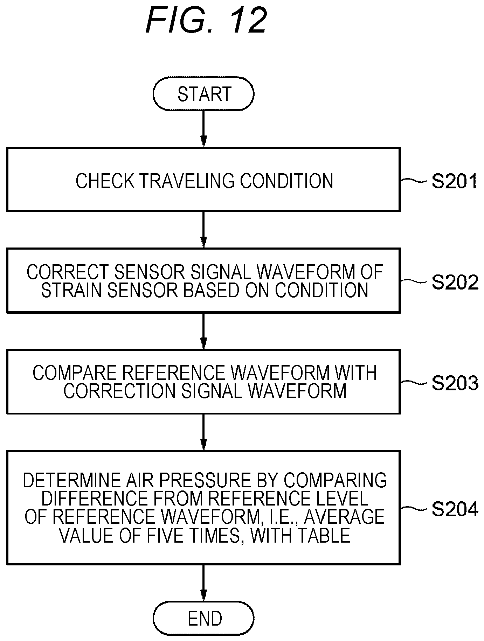

FIG. 12 is a flowchart for estimating air pressure at which the tire 101 travels from the sensor signal waveform 15 of the strain sensor 3 according to the first embodiment.

The flowchart of a method for detecting air pressure illustrated in FIG. 12 is repeatedly performed at predetermined cycles while the vehicle 100 is traveling.

When the method for detecting air pressure is performed, the air pressure estimation unit 4 in S201 checks a traveling condition in the signal waveform correction unit 412 in a traveling state of the vehicle 100. The traveling condition matches the traveling condition when the first table 5 is derived. When the traveling condition in the signal waveform correction unit 412 is checked in S201, processing proceeds to S202.

The air pressure estimation unit 4 in step S202 extracts a correction value matching the condition stored in the storage unit 411 to correct the sensor signal waveform 15 output from the strain sensor 3 to a signal waveform under the same reference condition as that of the reference waveform, and subtracts the correction value from the sensor signal waveform 15 to acquire a correction signal waveform. After the processing in S202, the processing proceeds to S203.

The air pressure estimation unit 4 in S203 compares the reference level of the reference waveform with the reference level 151 of the correction signal waveform acquired by correcting the sensor signal waveform 15 detected by the strain sensor 3. After the processing in S203, the processing proceeds to S204.

The air pressure estimation unit 4 in S204 determines the air pressure according to a result of the comparison in S203 between the reference waveform and the correction signal waveform acquired by correcting the detected sensor signal waveform 15 output from the strain sensor 3. First, comparison with the reference level 151 is performed five times, for example, and a difference between an average value of the comparisons and the reference level 151 is acquired. Next, the difference from the average value of the five comparisons is compared with the first table 5, and air pressure corresponding to the difference is estimated. As described above, the air pressure estimation unit 4 corrects a magnitude at the reference level 151 of the sensor signal waveform 15 output by the strain sensor 3 in a state where the tire 101 is not grounded on the road surface 20 for the temperature of the tire 101 and the vehicle speed (the magnitude is changed in accordance with the reference level 151), and estimates (detects) tire air pressure from the correction value. The air pressure estimation unit 4 also holds the reference waveform (reference value) stored in the storage unit 411 as the first table 5, and estimates (detects) the tire air pressure by comparison with the reference waveform (reference value). The estimated air pressure is transmitted to the report unit 103. After the processing in S204, the processing temporarily ends.

### <Verification of method for detecting air pressure>

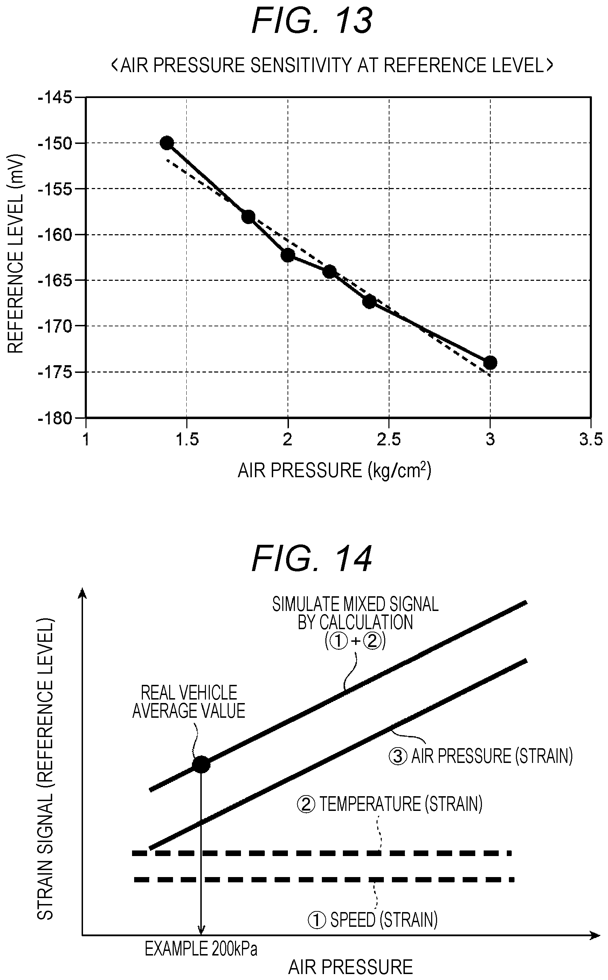

FIG. 13 shows a result of verifying whether air pressure can be estimated according to the flowchart of FIG. 12 based on an example of a measured sensor signal waveform of the strain sensor 3 according to the first embodiment. FIG. 13 shows air pressure sensitivity at the reference level 151 in the sensor signal waveform 15 of the strain sensor 3 for the reference condition (temperature, speed). As the air pressure rises, the reference level 151 linearly decreases (monotonically decreases), and thus finding that the air pressure sensitivity can constitute the first table 5 illustrated in the flowchart. Although FIG. 13 shows a case where the reference level 151 linearly decreases (monotonically decreases) with respect to the air pressure, the same applies to a case where the reference level 151 linearly increases (monotonically increases) for the air pressure.

FIG. 14 is an explanatory diagram illustrating the first table 5 of parameters mixed in the sensor signal waveform 15 of the strain sensor 3 according to the first embodiment. As illustrated in FIG. 14, the first table 5 is a proportional graph of correlation in which the amount of correction is equal regardless of how the air pressure changes for the sensor signal waveform 15. This is because temperature and speed are not sensitive to air pressure, and show constant values. The first table 5 is stored in the storage unit 411. The first table 5 is formed in which a line of air pressure actually acquired is derived by subtracting a value from a virtual line at the reference level 151 of the sensor signal waveform 15, the value being acquired by subtracting the amount of correction from various physical quantities in which the lines of the speed correction and the temperature correction are mixed.

### <Effects>

As described above, the sensor signal waveform 15 output from the strain sensor 3 is corrected according to the conditions of the parameters such as the temperature and the speed, and the air pressure is estimated in accordance with a difference between the correction signal and the reference waveform (reference value) held in the storage unit 411, and thus achieving an effect that the air pressure can be detected by the strain sensor 3.

### [Second embodiment]

An embodiment obtained by modifying the above embodiment will be described below. Hereinafter, a device will be described, the device being configured not only to detect air pressure as in the first embodiment, but also to correct a distortion waveform from the air pressure information and detect a load and wear. The entire configuration of a vehicle is assumed to be similar to that of the first embodiment, and thus will not be described.

### <Physical quantity detection device 2010>

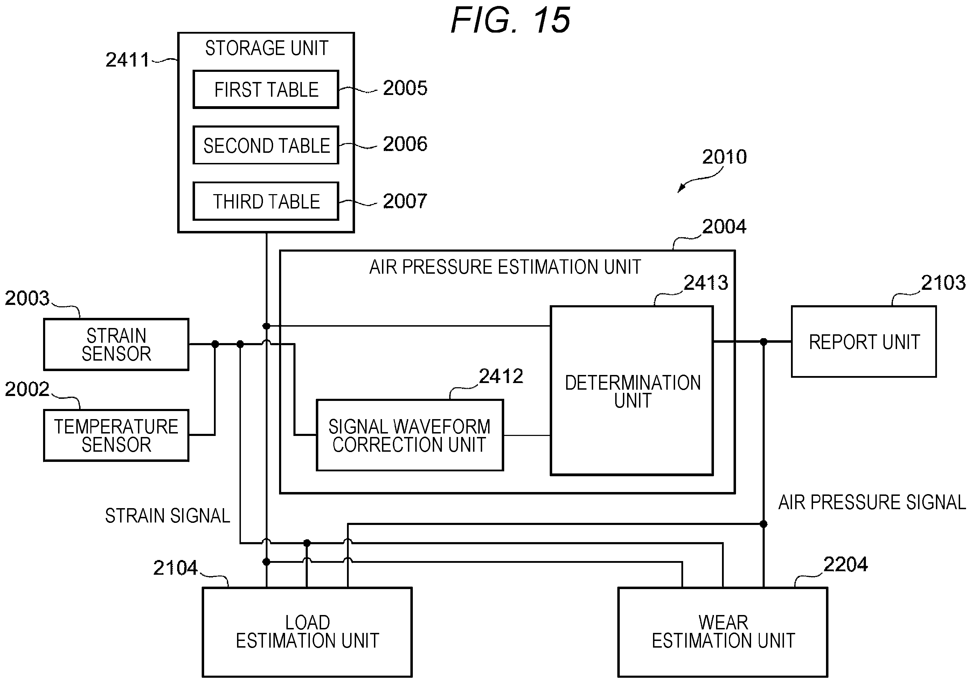

FIG. 15 is a block diagram illustrating a physical quantity detection device 2010 according to a second embodiment. The physical quantity detection device 2010 relates to a safe driving support device for the vehicle 100, and particularly provides a safe traveling state to prevent an accident due to insufficient control of a brake, or the like. The physical quantity detection device 2010 detects a load, wear, or the like affecting durability or grip force of the tire 101 mounted on the vehicle 100.

As illustrated in FIG. 15, the physical quantity detection device 2010 includes a strain sensor 2003, an air pressure estimation unit 2004, a load estimation unit 2104, a wear estimation unit 2204, a storage unit 2411, and a report unit 2103. While using air pressure detected based on a signal waveform having been output, the physical quantity detection device 2010 estimates a load and the amount of wear applied to the tire 101 similarly based on the signal waveform.

### <Air pressure estimation unit 2004>

The air pressure estimation unit 2004 functions when a program in the ECU 102 is executed to exhibit functions of the air pressure estimation unit 2004. The air pressure estimation unit 2004 receives a sensor signal waveform 15 output from the strain sensor 2003.

The air pressure estimation unit 2004 acquires temperature of the tire 101 from a temperature sensor 2002. The air pressure estimation unit 2004 acquires speed by dividing a tire outer circumference by an output cycle of the sensor signal waveform 15. The air pressure estimation unit 2004 may acquire the speed from a speed sensor or the like. The air pressure estimation unit 2004 corrects the sensor signal waveform 15 output from the strain sensor 2003 in accordance with conditions of acquired parameters such as temperature and speed, and estimates air pressure or the like from a difference between a correction signal of the sensor signal waveform 15 and a reference waveform (reference value) held in the storage unit 2411. The air pressure estimation unit 2004 transmits the estimated air pressure to the report unit 2103, the load estimation unit 2104, and the wear estimation unit 2204.

The air pressure estimation unit 2004 includes a signal waveform correction unit 2412, and a determination unit 2413.

The signal waveform correction unit 2412 corrects air pressure, speed, and temperature, which are parameters of mixed signals mixed in the sensor signal waveform 15, to a signal waveform under a predetermined condition to cancel a difference from the reference condition using values in a first table 2005 stored in the storage unit 2411, and transmits a correction signal waveform of the sensor signal waveform 15 to the determination unit 2413.

The determination unit 2413 compares a peak value 152 at a positive level, a peak value 153 at a negative level, and a reference level 151, which are corrected and transmitted by the signal waveform correction unit 2412, with correlation characteristics for each parameter condition stored in the first table 2005 stored in the storage unit 2411, and determines the amount of air pressure from a difference in characteristics from the reference level 151. The determination unit 2413 transmits the amount of air pressure estimated to the report unit 2103.

### <Storage unit 2411>

The storage unit 2411 stores the reference waveform (a peak value at the positive level, a peak value the negative level, the reference level) acquired under a reference condition (air pressure, temperature, speed, a load) of the sensor signal waveform 15 output from the strain sensor 2003, and the first table 2005, a second table 2006, and a third table 2007, for the amount of change for each parameter condition. Examples of acquired data include data on an asphalt road surface.

### <Load estimation unit 2104>

Although a configuration of the load estimation unit 2104 is not illustrated, the configuration is similar to that of the air pressure estimation unit 2004.

That is, the load estimation unit 2104 acquires temperature and speed as with the air pressure estimation unit 2004 to correct the sensor signal waveform 15 output from the strain sensor 2003 in accordance with conditions of acquired parameters such as temperature, speed, and air pressure using air pressure information acquired by the air pressure estimation unit 2004, and estimates a load from a difference between a correction signal of the sensor signal waveform 15 and a reference waveform (reference value) held in the storage unit 2411. The load estimation unit 2104 transmits the estimated load to the report unit 2103.

As with the air pressure estimation unit 2004, the load estimation unit 2104 corrects air pressure, speed, temperature, and a load, which are parameters of mixed signals mixed in the sensor signal waveform 15, to a signal waveform under a predetermined condition to cancel a difference from the reference condition using values in the second table 2006 stored in the storage unit 2411, and determines the load.

The determination is performed in which the corrected peak value 153 at the negative level is compared with the correlation characteristics for each parameter condition stored in the second table 2006 stored in the storage unit 2411 to determine the amount of load from a difference in characteristics from the peak value 153 at the negative level. After the determination, the amount of load estimated is transmitted to the report unit 2103.

### <Wear estimation unit 2204>

Although the wear estimation unit 2204 is responsible for wear detection, the wear estimation unit 2204 is similar in operation to the load estimation unit 2104, and thus the detailed description of the operation will not be described. The wear detection is different from the load detection in that although a load is estimated using the negative peak value 153 in the load detection, the amount of wear is determined in the wear detection by using the positive peak value 152 and comparing the corrected peak value 152 at the positive level with the correlation characteristic for each parameter condition stored in the third table 2007 stored in the storage unit 2411 to determine the amount wear from a difference in characteristics from the peak value 152 at the positive level.

### <Method for creating second table 2006>

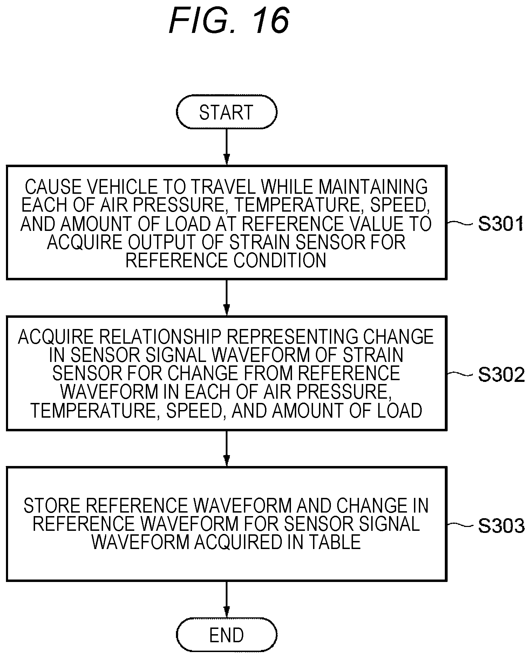

FIG. 16 is a flowchart for deriving the second table 2006 that stores correlation between a negative peak value and each condition including the reference condition of the sensor signal waveform 15 of the strain sensor 2003 according to the second embodiment.

As illustrated in FIG. 16, a predetermined controller (not illustrated) for a table creation examination in S301 causes the vehicle 100 to travel while maintaining each of air pressure, temperature, speed, and a load at a reference value to acquire output of the strain sensor 2003 for the reference condition. When load pressure is detected, attention is paid to a negative peak value in this waveform.

The controller in S302 acquires a relationship representing a change in the sensor signal waveform 15 of the strain sensor 2003 from the reference waveform when the vehicle 100 is caused to travel while changing each of the air pressure, temperature, speed, and a load from the reference value.

The controller in S303 stores the reference waveform and the amount of change from the reference waveform in the second table 2006 for the sensor signal waveform 15 acquired in S302.

The change in the sensor signal waveform 15 when each condition changes is not necessarily represented using a difference from the reference and a difference from a reference signal value. However, an absolute value of the signal value is different for each vehicle type or tire type, so that data as in the second table 2006 needs to be created in advance for each absolute value, and thus the amount of data greatly increases. Thus, the amount of data is reduced by describing the data using the difference from the reference value.

### <Second table 2006>

The storage unit 2411 preliminarily stores a table showing a correlation between the negative peak value 153 of the sensor signal waveform 15 of the strain sensor 2003 and air pressure, temperature, speed, and a load while changing these values.

Each correlation table of the second table 2006 is the same as that of the first table 5, and thus will not be described.

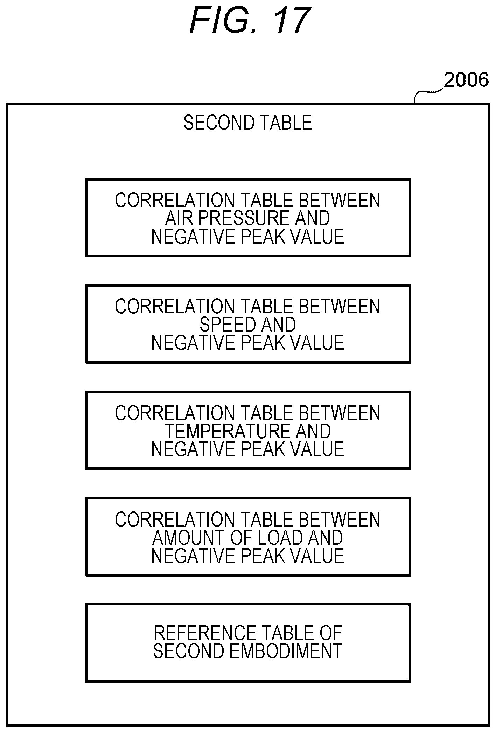

FIG. 17 is an explanatory diagram illustrating the second table 2006 including various tables according to the second embodiment. As illustrated in FIG. 17, the second table 2006 includes tables of various correlations of negative peak values of the second embodiment. Thus, the amount of correction is estimated from the second table 2006 stored in the storage unit 2411 for the negative peak value 153 of the sensor signal waveform 15 output from the strain sensor 2003 for each parameter in the vehicle 100 traveling.

### <Method for detecting load>

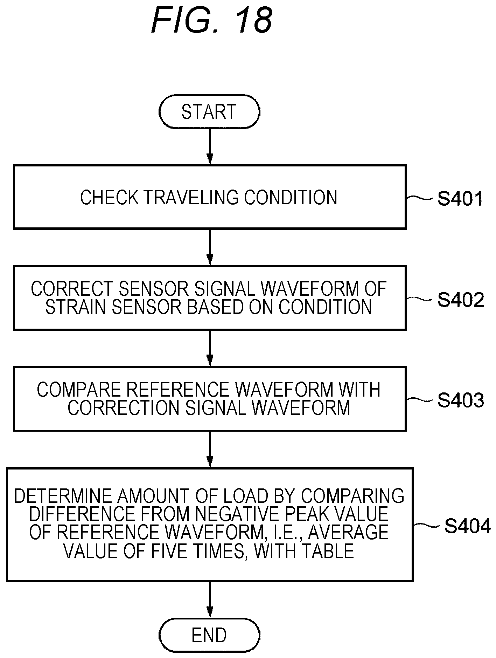

FIG. 18 is a flowchart for estimating a load at which the tire 101 travels from the sensor signal waveform 15 of the strain sensor 2003 according to the second embodiment.

The flowchart of a method for detecting a load illustrated in FIG. 18 is repeatedly performed at predetermined cycles while the vehicle 100 is traveling.

When the method for detecting a load is performed, the load estimation unit 2104 in S401 checks a traveling condition in the signal waveform correction unit 2412 in a traveling state of the vehicle 100. The traveling condition matches the traveling condition when the second table 2006 is derived. The traveling condition is temperature, speed, or air pressure acquired by the air pressure estimation unit 2004. When the traveling condition in the signal waveform correction unit 2412 is checked in S401, processing proceeds to S402.

The load estimation unit 2104 in step S402 extracts a correction value matching the condition stored in the storage unit 2411 to correct the sensor signal waveform 15 output from the strain sensor 2003 to a signal waveform under the same reference condition as that of the reference waveform, and subtracts the correction value from the sensor signal waveform 15 to acquire a correction signal waveform. After the processing in S402, the processing proceeds to S403.

The load estimation unit 2104 in S403 compares the reference level of the reference waveform with the negative peak value 153 of the correction signal waveform acquired by correcting the sensor signal waveform 15 detected by the strain sensor 2003. After the processing in S403, the processing proceeds to S404.

The load estimation unit 2104 in S404 determines the load according to a result of the comparison in S403 between the reference waveform and the correction signal waveform acquired by correcting the detected sensor signal waveform 15 output from the strain sensor 2003. First, comparison with the negative peak value 153 is performed five times, for example, and a difference between an average value of the comparisons and the negative peak value 153 is acquired. Next, the difference from the average value of the five comparisons is compared with the second table 2006, and a load corresponding to the difference is estimated. In this manner, the air pressure estimation unit 2004 estimates (detects) tire air pressure at the reference level 151 of the sensor signal waveform 15 of the strain sensor 2003, and the load estimation unit 2104 estimates (detects) a tire load from the strain signal corrected by the tire air pressure. The load estimation unit 2104 also holds the reference waveform (reference value) stored in the storage unit 2411 as the second table 2006, and estimates (detects) the tire load by comparison with the reference waveform (reference value). The estimated load is transmitted to the report unit 2103. After the processing in S404, the processing temporarily ends.

### <Load detection result>

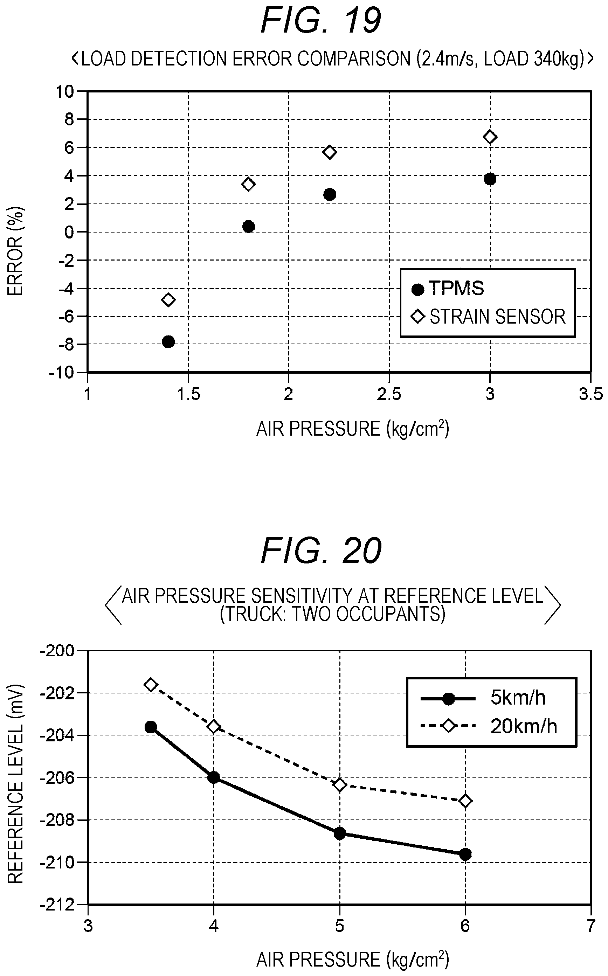

FIG. 19 illustrates a specific load detection error. This is a result of comparing load detection errors in a tire type 225/65/R17 (outer diameter: 724 mm) of a normal vehicle estimated based on air pressure information acquired by a general air pressure sensor (TPMS) and a strain sensor. Load estimation errors were each plotted with air pressure as a parameter (1.4 to 3.0 kg/cm2) under conditions of a vehicle speed of 2.4 m/s and a load of 340 kg/wheel. While having an air pressure measurement error of generally about 5%, the TPMS has the load detection error of about ±8%. In contrast, although the load detection error estimated based on air pressure acquired by the strain sensor slightly increases with respect to that of the TPMS, the error is totally within ±8%, and thus the load can be detected with high accuracy.

### <Method for detecting wear>

A method for detecting wear is basically the same as the method for detecting a load except that the wear is detected using the positive peak value 152 instead of the negative peak value 153, and thus a detailed description of the method will not be described.

### <Effects>

As described above, the air pressure can be detected with the magnitude at the reference level of the sensor signal waveform of the strain sensor, and the load and wear can be detected with the positive peak value and the negative peak value of the sensor signal waveform. That is, one sensor can detect three physical quantities, and thus achieving an effect of reducing product cost by reduction in number of sensors.

### [Third embodiment]

Hereinafter, a device for detecting a physical quantity related to a truck tire will be described in contrast to the device for detecting air pressure, a load, and wear related to a normal vehicle tire according to the second embodiment. The entire configuration of a vehicle is assumed to be similar to that of the first embodiment, and thus will not be described. Additionally, a configuration of a physical quantity detection device is similar to that of the second embodiment, and thus also will not be described.

### <Verification of method for detecting air pressure>

FIG. 20 shows a result of a third embodiment of verifying whether air pressure can be estimated according to the flowchart of FIG. 12 based on an example of a measured sensor signal waveform of the strain sensor 3 shown in the first embodiment. FIG. 20 shows air pressure sensitivity at the reference level 151 in the sensor signal waveform 15 of the strain sensor 3 for the reference condition (temperature, speed) for the tire type 205/70/R16 (outer diameter: 693 mm) of a truck. FIG. 20 shows the air pressure sensitivity at the reference level 151 when the vehicle speed is 5 km/h and 20 km/h. As the air pressure rises, the reference level 151 linearly decreases (monotonically decreases), and thus finding that the air pressure sensitivity can constitute the first table 5 illustrated in the flowchart. Although FIG. 20 shows a case where the reference level 151 linearly decreases (monotonically decreases) with respect to the air pressure, the same applies to a case where the reference level 151 linearly increases (monotonically increases) for the air pressure. It can be also seen that the reference level 151 increases as the vehicle speed increases. That is, it can be seen that the reference level 151 has sensitivity to the vehicle speed, and changes in accordance with the vehicle speed.

### <Effects>

As described above, even for the truck tire (i.e., even when the vehicle type changes), there is an effect of being able to detect air pressure at the magnitude at the reference level.

### [Summary of first to third embodiments]

As described above, the physical quantity detection devices 10 and 2010 of the present embodiments each detect a plurality of physical quantities acquired from the strain sensor installed in the tire 101. The physical quantity detection devices 10 and 2010 each detect air pressure of the tire 101 with the magnitude at the reference level 151 of a signal waveform output by the strain sensor in a state where the tire 101 is not grounded on the road surface 20.

The strain sensor is installed on a tire inner surface immediately below a groove of a tire tread surface.

The physical quantity detection devices 10 and 2010 each correct (change in accordance with the reference level 151) the magnitude at the reference level 151 of the signal waveform of the strain sensor for temperature and vehicle speed of the tire 101, and detect air pressure of the tire 101 from correction values of the temperature and vehicle speed.

The reference level 151 of the signal waveform of the strain sensor monotonically increases or monotonically decreases for the air pressure of the tire 101.

The physical quantity detection devices 10 and 2010 each detect the air pressure of the tire 101 from a magnitude of a radius of curvature of the inner surface of a tire tread and a magnitude of elongation of the tire tread in the horizontal direction (rotation direction), or from a magnitude at the reference level 151 of the signal waveform of the strain sensor that detects the magnitudes.

The physical quantity detection devices 10 and 2010 hold the reference values stored in the storage units 411 and 2411 provided in the physical quantity detection devices 10 and 2010, respectively, as respective tables, and detect the air pressure of the tire 101 by comparison with the reference values.

The physical quantity detection device 2010 detects air pressure of the tire 101 at the reference level 151 of the signal waveform of the strain sensor, and detects a load and wear of the tire 101 from a strain signal corrected by the air pressure of the tire 101.

The physical quantity detection device 2010 holds the reference value stored in the storage unit 2411 provided in the physical quantity detection device 2010 as the table, and detects a load and wear of the tire 101 by comparison with the reference value.

That is, one idea (first embodiment) of the present embodiments is the physical quantity detection device 10 that detects a plurality of physical quantities from a strain sensor installed on the tire 101, the physical quantity detection device 10 including one strain sensor, a physical quantity calculation unit (air pressure estimation unit 4), and a storage unit, in which the physical quantity calculation unit detects air pressure of the tire 101 with the magnitude at the reference level 151 of a signal waveform output by the strain sensor, in a state where the tire 101 having is not grounded on the road surface 20.

Another one idea (second embodiment) of the present embodiments is the physical quantity detection device 2010 that detects air pressure of the tire 101 at the reference level 151 of the signal waveform of the strain sensor, and detects a load and wear of the tire 101 from a strain signal corrected by the air pressure of the tire 101.

In this manner, the air pressure can be estimated from the magnitude at the reference level 151 of the strain signal output from a sensor element. Additionally, a load and the amount of wear can be estimated from magnitudes of the positive peak and the negative peak of the strain signal corrected by the air pressure.

The physical quantity detection device according to each of the present embodiments enables not only detection of air pressure of the tire with the magnitude at the reference level of the signal waveform of the strain sensor, but also detection of the load and the wear at the positive peak and the negative peak of the signal waveform. That is, one sensor can detect three physical quantities, so that product cost can be reduced by reduction in number of sensors, and high detection accuracy can be achieved.

The present invention is not limited to the above embodiments, and includes various modifications. For example, the above embodiments have been described in detail to describe the present invention in an easy-to-understand manner, and are not necessarily limited to those having all the described configurations. The configuration of any one of the embodiments can be partially replaced with a configuration of another embodiment, and the configuration of the other embodiment can be added to the configuration of any one of the embodiments. Additionally, a configuration of another embodiment can be added, deleted, and replaced for a part of the configuration of each embodiment.

### Reference Signs List

- 2: temperature sensor
- 3: strain sensor
- 4: air pressure estimation unit
- 5: first table
- 10: physical quantity detection device
- 15: sensor signal waveform
- 100: vehicle
- 101: tire
- 102: ECU
- 103: report unit
- 151: reference level
- 152: peak value at positive level
- 153: peak value at negative level
- 411: storage unit
- 412: signal waveform correction unit
- 413: determination unit

## Claims

1. A physical quantity detection device configured to detect a plurality of physical quantities acquired from a strain sensor installed in a tire,
the physical quantity detection device detecting air pressure of the tire with a magnitude at a reference level of a signal waveform output by the strain sensor in a state where the tire is not grounded on a road surface.

2. The physical quantity detection device according to claim 1, wherein the strain sensor is installed on a tire inner surface immediately below a groove of a tire tread surface.

3. The physical quantity detection device according to claim 1, wherein the physical quantity detection device corrects the magnitude at the reference level of the signal waveform of the strain sensor for temperature and vehicle speed of the tire, and detect the air pressure of the tire from correction values of the temperature and vehicle speed.

4. The physical quantity detection device according to claim 1, wherein the reference level of the signal waveform of the strain sensor monotonically increases or monotonically decreases for the air pressure of the tire.

5. The physical quantity detection device according to claim 1, wherein the physical quantity detection device detects the air pressure of the tire from a magnitude of a radius of curvature of an inner surface of a tire tread and a magnitude of elongation of a tire tread in a horizontal direction.

6. The physical quantity detection device according to claim 1, wherein the physical quantity detection device holds reference values stored in a storage unit provided in the physical quantity detection device as a table, and detects the air pressure of the tire by comparison with the reference values.

7. The physical quantity detection device according to claim 1, wherein the physical quantity detection device detects the air pressure of the tire at the reference level of the signal waveform of the strain sensor, and detects a load and wear of the tire from a strain signal corrected by the air pressure of the tire.

8. The physical quantity detection device according to claim 7, wherein the physical quantity detection device holds reference values stored in a storage unit provided in the physical quantity detection device as a table, and detects a load and wear of the tire by comparison with the reference values.
